**Europäisches Patentamt**

**European Patent Office**

**Office européen des brevets**

(19)

(11) Veröffentlichungsnummer: **0 197 527 B1**

(12) **EUROPÄISCHE PATENTSCHRIFT**

(45) Veröffentlichungstag der Patentschrift: **20.03.91**

(51) Int. Cl.⁵: **H04N 7/12, H04L 25/49**

(21) Anmeldenummer: **86104668.8**

(22) Anmeldetag: **05.04.86**

(54) Verfahren zur digitalen Nachrichtenübertragung.

(30) Priorität: **12.04.85 DE 3513074**

(43) Veröffentlichungstag der Anmeldung:
**15.10.86 Patentblatt 86/42**

(45) Bekanntmachung des Hinweises auf die
Patenterteilung:
**20.03.91 Patentblatt 91/12**

(84) Benannte Vertragsstaaten:
**AT BE CH DE FR GB IT LI LU NL SE**

(56) Entgegenhaltungen:
**DE-A- 2 460 654**
**DE-A- 2 835 434**

**P. BOCKER "Datenübertragung", Band I:
Grundlagen, 2. Auflage, 1983 SPRINGER-
VERLAG, Berlin, Heidelberg, Seiten 37-50**

(73) Patentinhaber: **TELEFUNKEN Fernseh und
Rundfunk GmbH
Göttinger Chaussee 76
W-3000 Hannover 91(DE)**

(72) Erfinder: **Keesen, Heinz-Werner, Dr.-Ing.
Tiestestrasse 5
W-3000 Hannover 1(DE)**
Erfinder: **Oberjatzas, Günter, Dipl.-Ing.
Langenkampstrasse 42
W-3013 Barsinghausen(DE)**
Erfinder: **Peters, Hartmut, Dipl.-Ing.
Wilh.-Bluhm-Strasse 37
W-3000 Hannover 91(DE)**

(74) Vertreter: **Einsel, Robert, Dipl.-Ing.
TELEFUNKEN Fernseh und Rundfunk GmbH
Göttinger Chaussee 76
W-3000 Hannover 91(DE)**

## Beschreibung

Die Erfindung betrifft ein Verfahren zur digitalen Nachrichtenübertragung gemäß dem Oberbegriff des Patentanspruchs 1.

Nach der Dissertationsarbeit an der TH Aachen von W. Mauersberger, "Adaptive Transformationskodierung von digitalisierten Bildsignalen" aus dem Jahre 1980, wird für die digitale Nachrichtenübertragung eine Quellenkodierung angewandt, um ein Nachrichtenvolumen, das über einen Nachrichtenkanal übertragen wird, zu reduzieren (Seite 1 der Dissertation). Eine Datenreduktion wird durch die Quantisierung eines vorverarbeiteten Signals erreicht (Seite 67 der Dissertation). Vor der Übertragung wird ein Block, im folgenden Matrix genannt, mit transformierten Werten, im folgenden Spektralwerte oder Spektralkoeffizienten genannt, klassifiziert. Die Klassifikation erfolgt derart, daß entsprechend der Bedeutung eine ausgesuchte Gruppe von Spektralwerten, das kann eine Reihe, eine Spalte, Teile einer Reihe oder Teile einer Spalte oder eine Kombination von Teilen einer Spalte und/oder Teile einer Reihe sein, übertragen wird. Insgesamt sind 7 Klassen vorgesehen (Seite 154 ff). Dann wird die Adresse der Klasse übertragen und anschließend die quantisierten Spektralwerte. Der Nachteil dieses Systems liegt darin, daß hierbei auch redundante Werte übertragen werden.

Ein anderes Verfahren, das in der Figur 5 von EP-A-0 084 270 vorgestellt wird, ist ein Zick-Zack Scan der Blöcke verbunden mit einer Lauflängencodierung. Dabei wird die Matrix mit den Spektralwerten oben links beginnend diagonal abgetastet. Die Lauflänge zeigt an, wieviele Werte insgesamt übertragen werden, bevor der Lauf abgebrochen wird. Auch hier liegt der Nachteil des Systems darin, daß redundante Werte, die auf dem Weg des Abtasters liegen, mitübertragen werden.

Aus DE-A1-2835434 ist ein Verfahren bekannt, bei dem solche redundanten Spektralwerte nicht übertragen werden. Dazu werden von den Blöcken eines gesamten Bildes zunächst die Spektralwerte mit größeren Betragswerten zum Empfänger übertragen. Anschließend können die Spektralwerte mit den nächstkleineren Beträgen übertragen werden, danach Spektralwerte mit nochmals kleineren Beträgen und so fort. Der Empfänger kann dabei entscheiden, wieviel Spektralwerte mit welchen Beträgen verarbeitet werden. Die übertragenen Spektralwerte werden im Empfänger gespeichert und laufend rücktransformiert. Dem Empfänger werden die Adressen der Spektralwerte mitgeteilt.

Aus P. Bocker, "Datenübertragung", Band I: Grundlagen, 2. Auflage, 1983, Seiten 37 - 50 ist es bekannt, codierte Daten (Spektralwerte und ihre Adressen) zusätzlich vor der Übertragung mit einer Kanalkodierung zu versehen, um z. B. eine Fehlerkorrekturmöglichkeit zu erhalten. Ein Übertragungssystem, welches die Verfahren dieser beiden letztgenannten Schriften kombiniert, ist aber für eine Videosignalübertragung mit guter Bildqualität in Echtzeit nicht geeignet. Für diesen Zweck müssen alle relevanten Spektralwerte und ihre Adressen Block für Block in einer codewortlänge-sparenden Weise übertragen werden, wobei der Empfänger keine Einflußmöglichkeit auf die Auswahl der übertragenen Spektralwerte hat und wobei die Adressierung der übertragenen Spektralwerte nur einen geringen Anteil an der Gesamtdatenrate haben darf.

Der Erfindung liegt die Aufgabe zugrunde, nur relevante Spektralwerte mit ihren zugehörigen Adressen zu übertragen und die dafür benötigte mittlere Wortlänge zu reduzieren.

Diese Aufgabe wird durch die im Patentanspruch 1 genannten Merkmale gelöst. Vorteilhafte Weiterbildungen sind in Unteransprüchen genannt.

Die Spektralwerte einer Matrix werden nach Größe sortiert und die Beträge der Spektralwerte werden der Reihe nach, mit dem größten beginnend, übertragen. Wenn die Beträge der Spektralwerte nach Größe sortiert sind, so ist der Betrag eines Spektralwertes immer eine Vorinformation für die Größe des Betrages des nachfolgenden Spektralwertes. Da nachfolgende Beträge immer kleiner oder gleich dem vorhergehenden Betrag sein müssen, können die Stellen für Bits, die die Größe des vorhergehenden Wertes überschreiten würden, eingespart werden. Das heißt, die Wortlänge für Beträge der Spektralwerte nimmt mit steigender Anzahl der übertragenen Spektralwerte ab.

In einer Weiterbildung der Erfindung werden anstelle von Adressen Adressendifferenzen übertragen, wenn aufeinanderfolgende Werte in der gleichen Größenordnung liegen, d.h. wenn aufeinanderfolgende Werte das MSB (most significant bit, höchstwertiges Bit) an gleicher Stelle stehen haben. Adressen und Adressendifferenzen können dann mit einem Huffman-Code übertragen werden. Dabei werden weitere Bits eingespart. Zum besseren Verständnis der Erfindung wird nachstehend ein Ausführungsbeispiel anhand von Figuren erläutert. Es zeigen:

Fig. 1 ein Übertragungssystem

Fig. 2 einen Quellenkoder

Fig. 3 eine Matrix mit Spektralwerten und eine mit Adressen

Fig. 4 Spektralwerte mit zugehörigen Binärworten und mit eingesparten Bits und

Fig. 5 Verfahrensschritte.

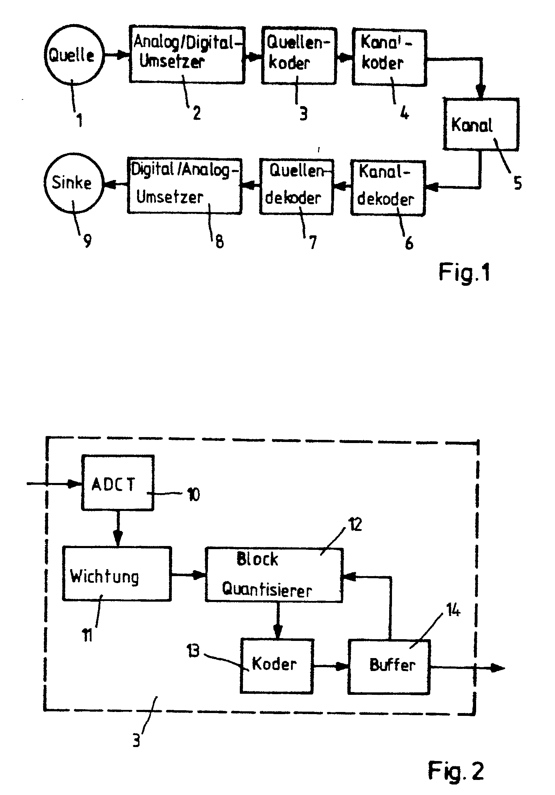

Fig. 1 zeigt eine Nachrichtenquelle 1, einen ADU 2 (Analog-Digital-Umsetzer), einen Quellenkoder 3, einen Kanalkoder 4, einen Kanal 5, einen Kanaldekoder 6, einen Quellendekoder 7, einen DAU 8 (Digital-Analog-Umsetzer) und eine Nachrichtensinke 9. Der Kanal 5 kann beispielsweise für eine HF-Übertragungsstrecke oder einen digitalen Videorecorder stehen. Ein digitaler Videorecorder kann aber auch beispielsweise für den ADU 2, den Quellenkoder 3, den Kanalkoder 4, den Kanal 5, den Kanaldekoder 6, den Quellendekoder 7 und den DAU 8 stehen.

Fig. 2 zeigt, daß ein Digitalsignal erstens einen ADCT 10 (Adaptiven-Diskreten-Cosinus-Transformator), zweitens eine Wichtung 11, drittens einen Blockquantisierer 12, viertens einen Koder 13 und fünftens einen Buffer 14 durchläuft. Speziell wenn Bilder direkt ohne Zwischenspeicherung an einen Quellenkoder 7 abgegeben werden, muß der Blockquantisierer 11 so gesteuert sein, daß empfängerseitig immer genügend Daten für die Erzeugung eines Bildes mit akzeptabler Bildqualität vorhanden ist.

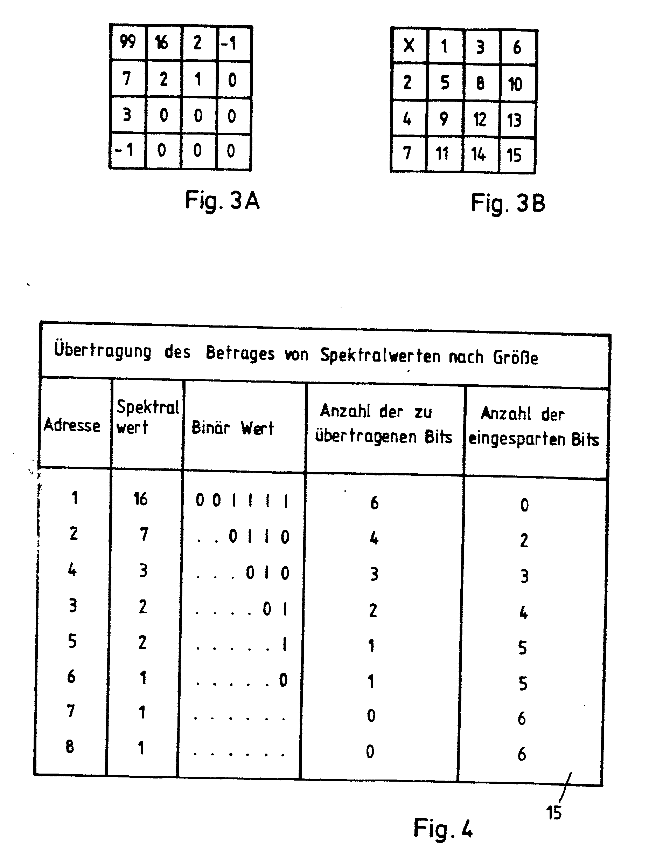

Fig. 3A zeigt einen Block von Spektralwerten, wie er nach einer adaptiven diskreten Cosinus Transformation an dem Block-Quantisierer 11 ansteht. Fig. 3B zeigt Adressen 1 - 15, die die Lage der Spektralwerte im Block kennzeichnen. Die mit X markierte Stelle beinhaltet den Spektralwert für den Gleichanteil einer Matrix, im folgenden Mittelwert genannt. Niedrige Adressen sind so angeordnet, daß sie an Stellen stehen, an denen relevante Werte nach einer Cosinus Transformation und/oder nach einer Wichtung zu erwarten sind. In der Praxis wird z.Zt. mit einer 8 X 8 Matrix gearbeitet, das entspricht 64 Spektralwerten bzw. 64 Bildpunkten pro Block.

Fig. 4 zeigt Spektralwerte in dezimaler und binärer Darstellung, die zugehörigen Adressen, die Anzahl der zu übertragenden und die Anzahl der eingesparten Bits. Erfindungsgemäß werden nur Beträge von Spektralwerten übertragen, die größer oder gleich 1 sind (Spektralwert ≥ 1). Da die Zahl Null entfällt, ergibt sich für den Spektralwert 16 der Binärwert 1111. Der erste Spektralwert 16 wird als Absolutwert mit z.B. 6 Bit übertragen. Die Spektralwerte sind der Größe nach sortiert. Für den ersten zu übertragenden größten Spektralwert muß die Anzahl der bereitgestellten Bits so bemessen sein, daß der Spektralwert binär darstellbar ist. In diesem Beispiel ist die Anzahl zu 6 Bit gewählt. Da von den 6 Bit für den Spektralwert 16 die ersten beiden MSB nicht benutzt werden (führende Nullen sind), kann die Anzahl für den nachfolgenden Spektralwert auf 4 Bit eingeschränkt werden. Diese Schlußfolgerung ist im Quellendekoder nachvollziehbar und liegt dem Quellendekoder als Vorinformation für den nachfolgenden Spektralwert 7 vor. Dabei werden für den nachfolgenden Spektralwert 7 bereits zwei Bit eingespart. Der zweite Spektralwert mit der Betragsgröße 7 wird mit 4 Bit übertragen. Für den 3. zu übertragenden Spektralwert mit der Betragsgröße 3 liegt als Vorinformation vor, daß er kleiner oder gleich 7 ist, das heißt, daß für den 3. Spektralwert nur noch 3 Bit vorgesehen werden müssen. Für den 4. zu übertragenden Spektralwert 2 mit der Adresse 3 sind 2 Bit vorgesehen, hier liegt als Vorinformation vor, daß der 4. Spektralwert kleiner oder gleich 3 ist. Für den 5. zu übertragenden Spektralwert mit dem Betrag 2 und der Adresse 5 ist nur noch 1 bit vorgesehen, da die Vorinformation auf einen Wert kleiner oder gleich 2 hinweist. Der 6. Spektralwert hat den Betrag 1 und die Adresse 6 und wird mit 1 bit übertragen, da die Vorinformation auf einen Wert kleiner oder gleich 2 hinweist. Alle übrigen Werte brauchen nicht übertragen zu werden, weil diese nur noch den Betrag 1 haben können.

Vorteilhaft braucht nicht nach Größe der Spektralwerte, sondern nur nach MSB des Spektralwertes sortiert zu werden. Da sich die Einsparung der Bits jeweils nach dem höchsten Bit (MSB) richtet, ist die Stellung von Nullen und Einsen hinter dem höchsten Bit bedeutungslos.

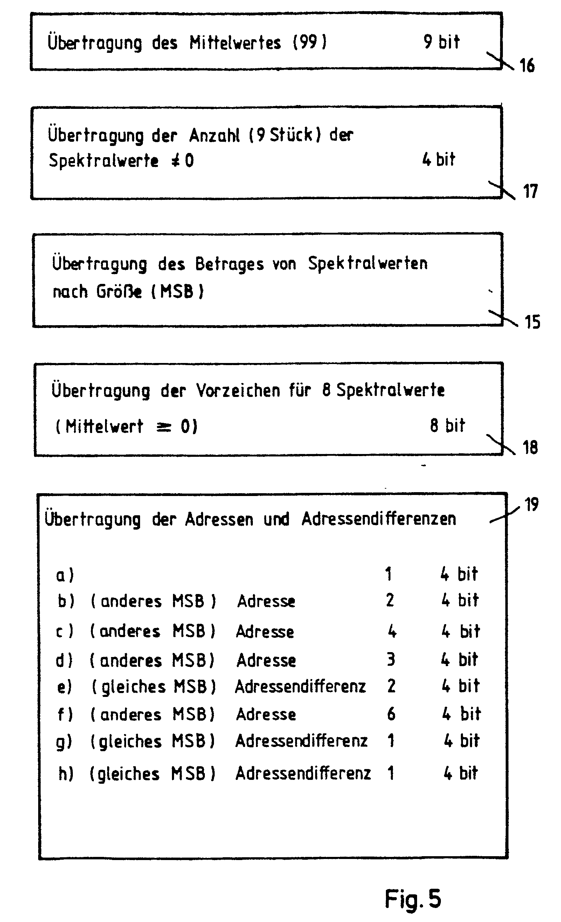

Fig. 5 zeigt die Reihenfolge der Verfahrensschritte. Der 1. Verfahrensschritt 16 beinhaltet die Übertragung des Mittelwertes. Da der Mittelwert allein schon eine Matrix von Spektralwerten weitestgehend charakterisiert, wird er gesondert als absoluter Wert mit 9 Bit übertragen. Als 2. Verfahrensschritt 17 folgt die Übertragung der Anzahl der Spektralwerte, die ungleich Null sind, die Anzahl muß bei einer Matrix von 16 Worten mit 4 bit übertragen werden. Als 3. Verfahrensschritt 15 folgt die Übertragung der Beträge von Spektralwerten nach Größe. Nach der Übertragung der Anzahl der Spektralwerte, die ungleich Null sind, kann bei der Übertragung der Spektralwerte nach der Übertragung des ersten Spektralwertes mit dem Betrag 1 abgebrochen werden, weil weitere Spektralwerte nur noch den Betrag 1 haben können. Betragswerte mit dem Wert 0 werden nicht übertragen, die Spektralwerte sind der Größe nach geordnet, also entfällt die Übertragung der restlichen Einsen. Als 4. Verfahrensschritt 18 werden die Vorzeichen für 8 Spektralwerte übertragen. Die Stellung des 4. Verfahrensschrittes im Verfahrensablauf ist willkürlich gewählt, als einzige Bedingung gilt, daß er nach dem 2. Verfahrensschritt, Übertragung der Anzahl der Spektralwerte, die ungleich 0 sind, übertragen wird. Das Vorzeichen des Mittelwertes ist immer positiv, da es keine negativen Mittelwerte gibt. Als 5. Verfahrensschritt 19 werden Adressen und Adressendifferenzen übertragen. Als erstes wird die Adresse 1, dann die Adresse 2, die Adresse 3, dann eine Adressendifferenz 2, die Adresse 6, die Adressendifferenz 1 und als letztes die Adressendifferenz 1 übertragen. Für jede Adresse und jede Adressendifferenz werden 4 bit benötigt, da Adressen und Adressendifferenzen maximal einen Wert von 15 erreichen können.

Anhand des im 3. Verfahrensschritt 15 beschriebene Verfahren ist erkennbar, ob entweder Adressen oder Adressendifferenzen übertragen werden. Vorteilhaft können Adressen und Adressendifferenzen mit dem Huffman-Code übertragen werden. Damit ergibt sich eine weitere Einsparung von Bits. Der Huffman-Code ist ein Codieralgorithmus von Huffman (1952) und führt stets zum Code mit der geringsten Redundanz R.

**Ansprüche**

1. Verfahren zur digitalen Nachrichtenübertragung, insbesondere für digitale Videosignale, bei dem ein Analogsignal in ein Digitalsignal umgesetzt wird, bei dem Blöcke (Fig. 3A) von Digitalsignal-Werten von einem Quellenkoder (3) verarbeitet und von einem Kanalkoder (4) auf einen Übertragungskanal (5) gegeben werden und bei dem die Blöcke (Fig. 3A) von codierten Digitalsignal-Werten von dem Übertragungskanal (5) über einen Kanaldecoder (6) zum Quellendekoder (7) gelangen, wobei im Quellenkoder Digitalsignal-Werte ihrer Betragsgröße nach sortiert werden und jedem Digitalsignal-Wert eine Adresse zugeordnet wird, **dadurch gekennzeichnet**, daß der Quellenkoder (3) die Digitalsignal-Werte innerhalb eines jeden Blocks der Betragsgröße nach sortiert und innerhalb eines jeden Blocks Gruppen von Digitalsignal-Werten bildet, wobei alle Digitalsignal-Werte einer Gruppe ein gleiches höchstwertiges Bit haben, und daß der Quellenkoder (3) die Digitalsignal-Werte innerhalb jeder Gruppe nach einem Adressdifferenzen-Verfahren und die Digitalsignal-Werte entsprechend der abnehmenden Betragsgröße mit abnehmender Wortlänge codiert (Fig. 4).

2. Verfahren nach Anspruch 1, dadurch gekennzeichnet, daß das Digitalsignal in einen Spektralbereich transformiert wird.

3. Verfahren nach Anspruch 1, dadurch gekennzeichnet, daß das Digitalsignal quantisiert wird.

4. Verfahren nach Anspruch 2, dadurch gekennzeichnet, daß das Digitalsignal und die Spektralwerte in zweidimensionalen Blöcken angeordnet sind.

5. Verfahren nach Anspruch 2 und/oder 4, dadurch gekennzeich net, daß die Spektralwerte nur nach dem höchstwertigsten gesetzten Bit geordnet übertragen werden.

6. Verfahren nach einem oder mehreren der vorhergehenden Ansprüche, dadurch gekennzeichnet, daß anstelle der Spektralwerte Beträge von Spektralwerten übertragen werden (Fig. 4).

7. Verfahren nach einem oder mehreren der vorhergehenden Patentansprüche, dadurch gekennzeichnet, daß das Digital-Signal so transformiert wird, daß ein Spektralwert für den Gleichanteil eines Blockes entsteht.

8. Verfahren nach einem oder mehreren der vorhergehenden Patentansprüche, dadurch gekennzeichnet, daß die Spektralwerte vor der Quantisierung verschieden gewichtet werden.

9. Verfahren nach Anspruch 7 und/oder 8, dadurch gekennzeich net, daß der Spektralwert für den Gleichanteil am höchsten gewichtet wird.

10. Verfahren nach Anspruch 7,8 und/oder 9, dadurch gekenn zeichnet, daß der Spektralwert für den Gleichanteil von den übrigen Spektralwerten getrennt übertragen wird.

11. Verfahren nach Anspruch 10, dadurch gekennzeichnet, daß der Spektralwert für den Gleichanteil mit einer vorgegebenen Anzahl von Bits übertragen wird.

12. Verfahren nach Anspruch 11, dadurch gekennzeichnet, daß die vorgegebene Anzahl größer oder gleich der Anzahl von Bits des größten verbleibenden Spektralwertes eines Blockes ist.

13. Verfahren nach einem oder mehreren der vorhergehenden Ansprüche, dadurch gekennzeichnet, daß die Vorzeichen der Spektralwerte übertragen werden (17).

14. Verfahren nach einem oder mehreren der vorhergehenden Ansprüche, dadurch gekennzeichnet, daß die Anzahl der Spektralwerte, die ungleich Null sind, übertragen wird (16).

15. Verfahren nach einem oder mehreren der vorhergehenden Ansprüche, dadurch gekennzeichnet, daß Adressen und Adressendifferenzen oder nur Adressendifferenzen übertragen werden (18).

16. Verfahren nach einem oder mehreren der vorhergehenden Ansprüche, dadurch gekennzeichnet, daß Adressen und Adressendifferenzen aufgrund der geordnet übertragenen Spektralwerte unterscheidbar sind (18).

17. Verfahren nach einem oder mehreren der vorhergehenden Ansprüche, dadurch gekennzeichnet, daß Adressen und/oder Adressendifferenzen im Huffman Code übertragen werden.

18. Verfahren nach einem oder mehreren der vorhergehenden Ansprüche, dadurch gekennzeichnet, daß die Quantisierungscharakteristik des Blockquantisierers (11) durch den Füllstand des Buffers (13) gesteuert wird.

19. Verfahren nach einem oder mehreren der vorhergehenden Ansprüche, dadurch gekennzeichnet, daß Spektralwerte nach Größe geordnet übertragen werden.

20. Verfahren nach einem oder mehreren der vorhergehenden Ansprüche, dadurch gekennzeichnet, daß führende Nullen unterdrückt werden.

**Claims**

1. A method of transferring digital information, more particularly for digital video signals, in which an analogue signal is converted into a digital signal, in which blocks (Fig.3A) of digital signal values are treated by a source coder (3) and passed to a transfer channel (5) by a channel coder (4) and in which the blocks (Fig. 3A) of coded digital signal values pass from the transfer channel (5) by way of a channel decoder (6) to the source decoder (7), and in the source coder the digital signal values are sorted according to their quantity size and an address is assigned to each digital signal value, characterized in that the source coder (3) sorts the digital signal values within each block according to quantity size and forms groups of digital signal values within each block, and all digital signal values of a group have the same most significant bit, and that the source coder (3) codes the digital signals within each group by an address difference method and the digital values with decreasing word length according to the decreasing quantity sizes (Fig.4).

2. A method according to Claim 1, characterized in that the digital signal is transformed into a spectral range.

3. A method according to Claim 1, characterized in that the digital signal is quantized.

4. A method according to Claim 2, characterized in that the digital signal and the spectral values are arranged in two-dimensional blocks.

5. A method according to Claim 2 and/or 4, characterized in that the spectral values transferred are arranged only according to the most significant bit that is set.

6. A method according to one or more of the preceding claims, characterized in that quantities of spectral values are transferred instead of spectral values (Fig.4).

7. A method according to one or more of the preceding patent claims, characterized in that the digital signal is so transformed that a spectral value for the equal portion of a block is produced.

8. A method according to one or more of the preceding patent claims, characterized in that the spectral values are differently weighted before quantization.

9. A method according to Claim 7 and/or 8, characterized in that the spectral value for the equal portion is weighted highest.

10. A method according to Claim 7, 8 and/or 9, characterized in that the spectral value for the equal portion is transferred separately from the other spectral values.

11. A method according to Claim 10, characterized in that the spectral value for the equal portion is transferred with a predetermined number of bits.

12. A method according to Claim 11, characterized in that the predetermined number is greater than or equal to the number of bits of the greatest remaining spectral value in a block.

13. A method according to one or more of the preceding claims, characterized in that the signs of the spectral values are transferred (17).

14. A method according to one or more of the preceding claims, characterized in that the number of the spectral values that are not equal to zero is transferred (16).

15. A method according to one or more of the preceding claims, characterized in that addresses and address differences or only address differences are transferred (18).

16. A method according to one or more of the preceding claims, characterized in that addresses and address differences are distinguishable by means of the spectral values transferred in order.

17. A method according to one or more of the preceding claims, characterized in that addresses and/or address differences are transferred in the Huffman code.

18. A method according to one or more of the preceding claims, characterized in that the quantization characteristic of the block quantizer (11) is controlled by the state of fullness of the buffer (13).

19. A method according to one or more of the preceding claims, characterized in that spectral values are transferred in order of size.

20. A method according to one or more of the preceding claims, characterized in that leading zeroes are suppressed.


**Revendications**

1. Procédé de transmission numérique d'informations, en particulier pour signeaux vidéo numériques, dans lequel un signal analogique est transformé en un signal numérique, dans lequel des blocs (fig. 3A) de valeurs de signal numérique sont traités par un codeur de source (3) et délivrés par un codeur de canal (4) à un canal de transmission (5) et dans lequel les blocs (fig. 3A) de valeurs codées de signal numérique parviennent, en venant du canal de transmission (5) à un décodeur de source (7) en passant par un décodeur de canal (6), les valeurs de signal numérique étant triées, dans le codeur de source, selon la grandeur de leur montant et une adresse correspondant à chaque valeur de signal numérique, caractérisé en ce que le codeur de source (3) trie les valeurs de signal numérique à l'intérieur d'un même bloc selon la grandeur du montant et forme, à l'inté-' rieur d'un même bloc, des groupes de valeurs de signal numérique, toutes les valeurs de signal numérique d'un groupe ayant un même bit le plus significatif et que le codeur de source (3) code les valeurs de signal numérique à l'intérieur de chaque groupe selon un procédé de différences d'adresses et les valeurs de signal numérique selon la grandeur décroissante du montant avec une longueur de mot décroissante (fig. 4).

2. Procédé selon la revendication 1, caractérisé en ce que le signal numérique est transformé en un domaine spectral.

3. Procédé selon la revendication 1, caractérisé en ce que le signal numérique est quantifié.

4. Procédé selon la revendication 2, caractérisé en ce que le signal numérique et les valeurs spectrales sont disposés en blocs bidimensionnels.

5. Procédé selon les revendications 2 et/ou 4, caractérisé en ce que les valeurs spectrales sont transmises en n'étant classées que d'après le bit le plus significatif.

6. Procédé selon l'une ou plusieurs des revendications précédentes, caractérisé en ce que les montants des valeurs spectrales sont transmis à la place des valeurs spectrales (fig. 4).

7. Procédé selon l'une ou plusieurs des revendications précédentes, caractérisé en ce que le signal numérique est transformé de manière telle qu'il se forme une valeur spectrale pour la partie pareille d'un bloc.

8. Procédé selon l'une ou plusieurs des revendications précédentes, caractérisé en ce que les valeurs spectrales sont pondérées différemment avant la quantification.

9. Procédé selon la revendication 7 et/ou 8, caractérisé en ce que la valeur spectrale est pondérée au maximum pour la partie pareille.

10. Procédé selon les revendications 7, 8 et/ou 9, caractérisé en ce que la valeur spectrale pour la partie pareille est transmise séparément des autres valeurs spectrales.

11. Procédé selon la revendication 10, caractérisé en ce que la valeur spectrale pour la partie pareille est transmise avec un nombre prédéterminé de bits.

12. Procédé selon la revendication 10, caractérisé en ce que le nombre prédéterminé est supérieur ou égal au nombre de bits de la valeur spectrale restante la plus grande d'un bloc.

13. Procédé selon l'une ou plusieurs des revendications précédentes, caractérisé en ce que les signes des valeurs spectrales sont transmis (17).

14. Procédé selon l'une ou plusieurs des revendications précédentes, caractérisé en ce que le nombre des valeurs spectrales différentes de zéro est transmis.

15. Procédé selon l'une ou plusieurs des revendications précédentes, caractérisé en ce que les adresses et les différences d'adresses ou seulement les différences d'adresses sont transmises.

16. Procédé selon l'une ou plusieurs des revendications précédentes, caractérisé en ce que les adresses et les différences d'adresses peuvent être distinguées en raison des valeurs spectrales transmises en étant classées (18).

17. Procédé selon l'une ou plusieurs des revendications précédentes, caractérisé en ce que les adresses et/ou les différences d'adresses sont transmises dans le code selon Huffman.

18. Procédé selon l'une ou plusieurs des revendications précédentes, caractérisé en ce que la caractéristique de quantification du quantificateur de bloc (11) est commandée par l'état de remplissage du tampon (13).

19. Procédé selon l'une ou plusieurs des revendications précédentes, caractérisé en ce que les valeurs spectrales sont transmises en étant classées selon la grandeur.

20. Procédé selon l'une ou plusieurs des revendications précédentes, caractérisé en ce que les zéros à gauche sont supprimés.

Fig.1

Fig.2

| 99 | 16 | 2 | -1 |
|----|----|----|----|
| 7 | 2 | 1 | 0 |
| 3 | 0 | 0 | 0 |
| -1 | 0 | 0 | 0 |

**Fig. 3A**

| X | 1 | 3 | 6 |
|---|---|---|----|
| 2 | 5 | 8 | 10 |
| 4 | 9 | 12 | 13 |
| 7 | 11 | 14 | 15 |

**Fig. 3B**

| Übertragung des Betrages von Spektralwerten nach Größe | | | | |
|---|---|---|---|---|
| Adresse | Spektral wert | Binär Wert | Anzahl der zu übertragenen Bits | Anzahl der eingesparten Bits |
| 1 | 16 | 0 0 1 1 1 1 | 6 | 0 |
| 2 | 7 | . . 0 1 1 0 | 4 | 2 |
| 4 | 3 | . . . . 0 1 0 | 3 | 3 |
| 3 | 2 | . . . . . 0 1 | 2 | 4 |
| 5 | 2 | . . . . . . 1 | 1 | 5 |
| 6 | 1 | . . . . . . 0 | 1 | 5 |
| 7 | 1 | . . . . . . . | 0 | 6 |
| 8 | 1 | . . . . . . . | 0 | 6 |

15

**Fig. 4**

Übertragung des Mittelwertes (99)        9 bit

16

Übertragung der Anzahl (9 Stück) der
Spektralwerte ≠ 0                        4 bit

17

Übertragung des Betrages von Spektralwerten
nach Größe (MSB)

15

Übertragung der Vorzeichen für 8 Spektralwerte

(Mittelwert ≥ 0)                         8 bit

18

19

Übertragung der Adressen und Adressendifferenzen


a)                                            1      4 bit

b)  (anderes  MSB)    Adresse                  2      4 bit

c)  (anderes  MSB)    Adresse                  4      4 bit

d)  (anderes  MSB)    Adresse                  3      4 bit

e)  (gleiches MSB)    Adressendifferenz        2      4 bit

f)  (anderes  MSB)    Adresse                  6      4 bit

g)  (gleiches MSB)    Adressendifferenz        1      4 bit

h)  (gleiches MSB)    Adressendifferenz        1      4 bit

Fig. 5